# EUROPEAN PATENT APPLICATION

(11) **EP 4 686 739 A1**
(43) Date of publication of application: **04.02.2026**
(21) Application number: 25191780.3
(22) Date of filing: 25.07.2025
(51) Int. Cl.: C08L 77/02

(54) **RECYCLED POLYMER COMPOSITIONS**

(30) Priority: 31.07.2024 US 202463677531 P
(71) Applicant: Kraton Polymers Nederland B.V., 1322 CE Almere (NL)
(72) Inventor: Bhattacharya, Aparajita, Houston, 77084 (US); Goncalves da Silva, Eduardo, Houston, 77084 (US)
(74) Representative: Henkel & Partner mbB

(57) **Abstract**

A recycled polymer composition is disclosed, comprising: (a) a recycled polymer blend consisting of (a1) a recycled polyamide and (a2) a recycled synthetic fiber material; (b) a block copolymer selected from a functionalized HSBC and a non-functionalized HSBC; and (c) optional additives. The functionalized HSBC comprises a functional group selected from maleic anhydride, epoxy, and silane. The recycled synthetic fiber material comprises one or more polymers selected from the group consisting of polyether-polyurea copolymer, polyether-polyester copolymer, polyester-polyurea copolymer, and polyurea derived from paraphenylene-diisocyanate and paraphenylenediamine. The recycled polymer blend includes a weight ratio of recycled polyamide to recycled synthetic fiber material ranging from 1:10 to 10:1. The recycled polymer composition exhibits an improved melt flow rate and a balance of mechanical properties compared to a corresponding composition lacking the block copolymer.

## Description

### FIELD

The disclosure relates to a recycled polymer composition, methods of preparation, and applications thereof.

### BACKGROUND

Reducing, reusing, and recycling, collectively known as the three 'R' principles, hold significant potential for conserving resources over time. Among these, plastic recycling has garnered global attention due to the widespread use of plastics in everyday life. One of the main challenges in plastic recycling lies in the collection and segregation of plastics based on their types

Fiber recycling presents an additional challenge, particularly in the recycling of fibers from recycled materials. Most fibers are made from thermoplastics such as polyamides, polyesters, polypropylene, and spandex. These materials exhibit limited recyclability, with the unrecycled portion typically subjected to energy recovery processes or disposed of in landfills. Challenges in fiber recycling include mixed material compositions, contamination, fiber degradation during use and handling, downcycling (i.e., recycling into lower-quality products), and insufficient recycling infrastructure. Spandex fibers possess excellent stretch and elastic recovery due to their unique chemical structure. However, spandex is difficult to detect in textile recycling facilities and is challenging to separate from other fibers. Its elasticity can clog shredding machinery or result in small spandex fragments appearing in other recycled fabrics. The recycling of spandex or blends of spandex with other materials, such as polyester or polyamide, can impact desired properties, e.g., processability, rheological properties (e.g., melt flow rate), and mechanical properties.

There is still a need for a recycled polymer composition that includes a compatibilizer to improve melt flow rate, processability, and mechanical performance.

### SUMMARY

In one aspect, the disclosure relates to a recycled polymer composition comprising, consisting essentially of, or consisting of: (a) 80 to 99 wt.% of a recycled polymer blend consisting of (a1) a recycled polyamide, and (a2) a recycled synthetic fiber material; (b) 1 to 20 wt.% of a block copolymer; and (c) 0 to 10 wt.% of at least an additive. The recycled synthetic fiber material contains one or more polymers selected from the group consisting of: polyether-polyurea copolymer, polyether-polyester copolymer, polyester-polyurea copolymer, and polyurea derived from paraphenylene-diisocyanate and paraphenylenediamine. A weight ratio of (a1) to (a2) is from 1:10 to 10: 1. The block copolymer is selected from: (i) a functionalized hydrogenated styrenic block copolymer (functionalized HSBC), and (ii) a non-functionalized hydrogenated styrenic block copolymer (non-functionalized HSBC). Each of the block copolymers (i) and (ii) independently has a general structure selected from S-R-S, (S-R)ₙX, (S-R-S)ₙX, and mixtures thereof, X is a residue of a coupling agent, n is an integer from 2 to 30, each block "S" is composed of vinyl aromatic units, and each block "R" is composed of hydrogenated diene units. If the block copolymer is a functionalized HSBC, the block "R" comprises at least one functional group selected from maleic anhydride, epoxy, and silane. If the block copolymer is a non-functionalized HSBC, the block copolymer has: a vinyl aromatic unit content (VAC) of 8 to 35 wt.%, a butylene ("B") unit content of 25 to 60 wt.%, and a diblock content of 10 to 50 wt.%. The recycled polymer composition has a tensile strength at break of > 22 MPa, measured according to ASTM D638. Each of the above transitional terms (e.g., 'comprising,' 'consisting essentially of,' and 'consisting of') is intended to carry its conventional meaning as understood in patent law, or defined when appropriate.

In a second aspect, the block copolymer is a non-functionalized HSBC having a structure of S-R-S.

In a third aspect, the block copolymer is a functionalized HBSC comprising at least one functional group selected from the group consisting of maleic anhydride, epoxy, and silane.

In a fourth aspect, the block copolymer comprises a blend of a functionalized HSBC and a non-functionalized HSBC in a weight ratio of 1:10 to 10: 1.

### DETAILED DESCRIPTION

The following terms will be used throughout the specification.

"Consisting essentially of" means that the composition primarily includes the recited components and may additionally contain one or more components that do not materially affect the novel characteristics or intended function of the invention. In embodiments, such additional components are present in amounts of < 30 wt.%, < 20 wt.%, or < 10 wt.%, based on total weight of the composition.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Post-industrial recycle" or PIR refers to a plastic scrap material generated from industrial processes. PIR is typically in a pre-contamination state, with known input resin type.

"Post-consumer recycle," or PCR, or PCR material, or PCR polymer, or PCR resin, can be used interchangeably with "recycled composition," "recycled polymer," "waste polymer," "recycled resin" which includes PIR, different PIR, PIR from different sources, regrind PCR, different PCR, PCR from different sources, recyclate, and mixtures thereof. PCR does not include, or is to the exclusion of, virgin polymer.

"Virgin polymer" refers to an as-is-produced polymer, not yet processed and/or not yet formed into articles for end-use applications in industry or by consumers. The virgin polymer can include additives which are commonly used in the preparation of the virgin polymer.

"Vinyl aromatic unit content" or VAC of a block copolymer refers to the weight percentage of polymerized vinyl aromatic monomers, e.g., styrene, para-methylstyrene, etc., in the block copolymer. VAC is calculated by dividing the total molecular weight of all vinyl aromatic units by the total molecular weight of the block copolymer. It can be determined using proton nuclear magnetic resonance spectroscopy (¹H NMR) and ¹³C NMR. VAC is sometimes used interchangeably with PSC (polystyrene content).

"Butylene unit content" refers to the content, in weight percentage, of the butylene units ("B") relative to all diene based units in a given polymer (e.g., hydrogenated block copolymer). The butylene units are formed through the polymerization of 1,3-butadiene monomer via 1,2-addition, followed by hydrogenation. The 1,3-butadiene monomer can also polymerize through 1,4-addition, which, upon hydrogenation, results in ethylene units ("E"). Both butylene and ethylene units can be present in the hydrogenated block copolymer, which can also contain vinyl aromatic units and/or other units derived from conjugated diene monomers, arranged in any order. The butylene unit content can be measured by ¹H NMR and ¹³C NMR. The butylene unit ("B") content is sometimes used interchangeably with "vinyl content" prior to hydrogenation.

"Molecular weight" or Mw refers to the styrene equivalent molecular weight in kg/mol of a polymer block or a block copolymer. Mw can be measured with gel permeation chromatography (GPC) using polystyrene calibration standards, such as is done according to ASTM 5296-19. The GPC detector can be an ultraviolet or refractive index detector or a combination thereof. The chromatograph is calibrated using commercially available polystyrene molecular weight standards. Mw of polymers measured using GPC so calibrated are styrene equivalent molecular weights or apparent molecular weights. Mw expressed herein is measured at the peak of the GPC trace-and commonly referred to as styrene equivalent "peak molecular weight," designated as Mₚ.

"Coupling efficiency" or CE refers to the weight % of coupled polymer molecules relative to the total weight of both coupled and uncoupled polymer molecules. CE is expressed as a percentage (%) and can be used to estimate the content of diblock structures or, more generally, the proportion of "uncoupled arms" in the block copolymer. For example, a CE of 80% indicates that the block polymer contains 20 wt.% diblock (uncoupled) species and 80 wt.% triblock and multi-arm species.

"Spandex" can be used interchangeably with "Lycra," "Elastane," or other synthetic fiber materials. It refers to yarn and/or fiber known for exceptional elasticity and stretchability, made from polymers such as polyurethanes, polyether-polyurea copolymers, polyether-polyester copolymers, and similar materials.

"Unhydrogenated SBC" or USBC refers to a styrenic block copolymer (SBC) comprising non-hydrogenated diene units and vinyl aromatic units.

"Partially hydrogenated SBC" or pHSBC refers to a SBC in which diene units are hydrogenated to a level of 40 to 90 mol%, and vinyl aromatic units are hydrogenated to < 20 mol%, preferably < 10 mol%, and more preferably < 5 mol%.

"Hydrogenated SBC" or HSBC refers to a styrenic block copolymer (SBC) in which diene units are hydrogenated to a level > 90 mol%, preferably > 95 mol%, or more preferably > 98 mol%, or < 100 mol%, and vinyl aromatic units are hydrogenated to < 20 mol%, preferably < 10 mol%, and more preferably < 5 mol%.

"Maleated styrenic block copolymer" or SBC-g-MA or maleic anhydride grafted SBC, or maleic anhydride functionalized SBC are used interchangeably. They refer to a SBC in which at least one maleic anhydride group is grafted onto the polymer backbone or is attached to a vinyl group adjacent to the polymer backbone. The SBC can be HSBC.

"Epoxidized styrenic block copolymer" or e-SBC or epoxy grafted SBC or epoxy functionalized SBC are used interchangeably. They refer to a SBC in which at least one epoxy group is grafted onto the polymer backbone or is attached to a vinyl group adjacent to the polymer backbone. The SBC can be HSBC.

"Silanated styrenic block copolymer" or Si-SBC or silane grafted SBC, or silane functionalized SBC are used interchangeably. They refer to a SBC in which at least one silane group is grafted onto the polymer backbone or is attached to the vinyl group adjacent to the polymer backbone. The SBC can be HSBC.

The disclosure relates to a recycled polymer composition comprising: (a) a recycled polymer blend containing a recycled polyamide and a recycled synthetic fiber material; (b) at least one block copolymer selected from a functionalized HSBC and a non-functionalized HSBC; and (c) optional additives. The recycled polymer composition exhibits a balanced combination of mechanical properties and an improved melt flow rate compared to a similar composition without the addition of the block copolymer.

(Recycled Polymer Blends): The recycled polymer blend comprises a recycled polyamide and a recycled synthetic fiber material in a weight ratio of 1:10 to 10:1, or 1:8 to 8:1, or 1:5 to 5:1, or 1:3 to 3:1.

In embodiments, the recycled synthetic fiber material includes one or more polymers selected from the group consisting of polyether-polyurea copolymer, polyether-polyester copolymer, polyester-polyurea copolymer, and polyurea of paraphenylene-diisocyante and paraphenylenediamine.

In embodiments, the recycled polymer composition comprises the recycled polymer blend in an amount of 80 - 99 or 85 - 99, or 88 - 99, or 90 - 99 wt.%, based on total weight of the recycled polymer composition.

(Recycled Polyamides): The recycled polyamide is selected from the group consisting of aliphatic polyamides, aromatic polyamides, copolymers, and mixtures thereof.

The recycled polyamide is obtained by recycling polyamide or polyamide articles, e.g., fibers, films, sheets, molded articles, etc. Polyamides are generally obtained by polymerization of dicarboxylic acids and diamines using conventional methods. Common examples of dicarboxylic acids include adipic acid, sebacic acid, terephthalic acid, azelaic acid, 1,12-dodecanedioic acid, and the like. Suitable diamines include hexamethylenediamine, octamethylenediamine, ethylenediamine, 1,6-diaminohexane, 1,4-diaminobutane, 1,12-dodecanediamine, and the like. Alternatively, polyamides can also be derived from suitable monomers such as caprolactam, 11-amino undecanoic acid, laurolactam, or combinations thereof.

Examples of recycled polyamides include polyphthalamide (PPA), polyarylamide (PAA), poly(metaxylylene adipamide), amorphous semiaromatic polyamide, poly(paraphenylene terephthalamide), nylon 6, nylon 11, nylon 12, nylon 6-6, nylon 6-9, nylon 6-10, nylon 6-12, nylon 4-6, nylon 12-12, and mixtures thereof, all in recycled form.

In embodiments, the recycled polyamide is a recycled polyamide 6 (nylon 6).

(Recycled Synthetic Fiber Material): The recycled synthetic fiber material contains one or more polymer selected from the group consisting of polyether-polyurea copolymer, polyether-polyester copolymer, polyester-polyurea copolymers, polyurea derived from paraphenylene-diisocyanate and paraphenylenediamine, and mixtures thereof, all in recycled form. As used herein, the term "fiber" and "fiber material" is used interchangeably.

In embodiments, the recycled synthetic fiber material comprises a polyether-polyester copolymer that includes both ether units and ester units. The polyether-polyester copolymer can be either aliphatic or aromatic in nature. The ether units of the polyether-polyester copolymer can be represented by the formula (I): -[CR¹₂]ₚ-O-, wherein p is an integer from 2 to 4, and each R¹ independently represents an aliphatic / cycloaliphatic group containing 1 to 30 carbon atoms or an aromatic group having 6 or more carbon atoms. Depending on the integer p (1, 2, or 3), the ether units can contain 4, 6, or 8 R¹ groups, each of which independently represents an organic group with 1 to 20 carbon atoms or hydrogen.

The ester units of the polyether-polyester copolymer can be represented by the formula (II): -(D)_{q}-C(=O)-O-, wherein q is an integer from 1 to 10, and D represents an aliphatic / cycloaliphatic group containing 2 to 30 carbon atoms, or an aromatic group containing 6 or more carbon atoms. In embodiments, the polyether unit is composed of polyoxyalkylene blocks, while the polyester unit comprises polyoxycaproyl blocks.

In embodiments, the ether and ester units within the polyether-polyester copolymer are arranged in a random order manner along the polymer chain. As used herein, "random order" means that the ether and ester units are irregularly distributed throughout the copolymer backbone. Alternatively, the polyether-polyester copolymer can be a block copolymer, wherein the polyether and polyester segments are arranged in discrete blocks. A representative example of such a block copolymer is polyethylene terephthalate-poly(tetramethylene oxide) glycol.

In embodiments, the recycled synthetic fiber material comprises polyether-polyurea copolymers.

In embodiments, the recycled synthetic fiber material contains recycled spandex polymers. Spandex containing materials can include commercial products such as Acepora, Creora, Dorlastan, Elaspan, INVIYA, Linen, Lycra, ROICA, Elastane, etc. Spandex polymers are generally produced by reacting a prepolymer such as one derived from ethylene glycol and diisocyanate with a diamine through a chain extension process. The recycled spandex can include polyester-based spandex, polyether-based spandex, or combinations thereof. In embodiments, the recycled spandex is subjected to a decolorization process using a suitable oxidizing agent, such as hydrogen peroxide, to remove dyes or colorants prior to reuse.

The recycled synthetic fiber material can originate from either industrial or post-consumer sources. Examples include waste derived from consumer packaging, films, fibers, fabrics, yarns, textiles, rags, woven or non-woven cloths, etc.

In embodiments, in preparation for recycling, the recycled polymers including polyamides and/or synthetic fibers undergo mechanical pre-treatment. This treatment serves to remove foreign objects (e.g., clips, fasteners, decorative elements, labels, etc.), as well as stains and other impurities.

(Block Copolymers): The block copolymer can be selected from the group consisting of a functionalized hydrogenated styrenic block copolymer (functionalized HSBC), a non-functionalized hydrogenated styrenic block copolymer (non-functionalized HSBC), and mixtures thereof. The functionalized HSBC comprises at least one functional group selected from the group consisting of maleic anhydride, epoxy, silane, and combinations thereof, whereas the non-functionalized HSBC does not contain any functional group. The non-functionalized HSBC may contain a coupling agent residue, if a coupling agent is used, it is used for coupling polymer chains, without the purpose of introducing a functional group. The term "HSBC," unless otherwise stated, collectively refers to both the non-functionalized HSBC and the base polymer used to prepare the functionalized HSBC.

The HSBC can be a linear, branched, or radial block copolymer comprising at least one block "S" composed of vinyl aromatic units and at least one rubbery block "R" (block "R") composed of hydrogenated diene units and optionally vinyl aromatic units. The vinyl aromatic units are derived from polymerized vinyl aromatic monomers, while the hydrogenated diene units are derived, prior to hydrogenation, from polymerized conjugated diene monomers.

In embodiments, the recycled polymer composition comprises any styrenic block copolymer (SBC) in place of, or in addition to, the functionalized HSBC and/or non-functionalized HSBC. The SBC can be selected from unhydrogenated SBC (USBC), partially hydrogenated SBC (pHSBC), and mixtures thereof. In embodiments, the USBC and/or pHSBC can be functionalized with a suitable functional group, e.g., maleic anhydride, epoxy, silane, etc.

In embodiments, the HSBC has a general structure selected from: S-R, S-R-S, (S-R)ₙX, (S-R-S)ₙX, and mixtures thereof, n is an integer from 2 to 30, and X is residue of a coupling agent.

In embodiments, each block "R" is a block selected from E/B, E/B/S, EP/MB, EP/MB/S, E/B/EP/MB and combinations thereof.

In embodiments, block "R" is in the form of E/B composed of ethylene ("E") units and butylene ("B") units which are hydrogenated 1,4-butadiene units and hydrogenated 1,2-butadiene units, respectively.

In embodiments, block "R" is in the form of E/B/S composed of ethylene ("E") units, butylene ("B") unit, and vinyl aromatic units.

In embodiments, block "R" is in the form of EP/MB composed of ethylenepropylene (EP) units and methylene-butylene (MB) units. Each EP unit is a hydrogenated 1,4-isoprene unit and each MB unit is a hydrogenated 3,4-isoprene unit and a hydrogenated 1,2-isoprene unit.

In embodiments, block "R" is in the form of EP/MB/S composed of EP units, MB units, and vinyl aromatic units.

In embodiments, block "R" is in the form of E/B/EP/MB composed of ethylene ("E") units, butylene ("B") units, EP units, and MB units.

In embodiments, the coupling agent, X, includes bi- or polyfunctional compounds, for example divinylbenzene, halides of aliphatic or araliphatic hydrocarbons, such as 1,2-dibromoethane, bis(chloromethyl)benzene, silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, such as terephthalic dialdehyde, ketones, esters, anhydrides, or epoxides. In embodiments, the coupling agent is selected from methyltrimethoxysilane, methyltriethoxysilane, tetramethoxysilane, dimethyladipate, gamma-glycidoxypropyltrimethoxy silane, and mixtures thereof. In embodiments, the HSBC has a coupling efficiency (CE) of > 60%, or > 65%, or > 70%, or > 75%, or > 80%, or < 95%.

In embodiments, the vinyl aromatic monomer is selected from the group consisting of styrene, para-methylstyrene, para-ethyl styrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the conjugated diene monomer is selected from the group consisting of 1,3-butadiene, isoprene, 2,3-dimethyl-1,3-butadiene, 1-phenyl-1,3-butadiene, 1,3-pentadiene, 1,3-hexadiene, 3-butyl-1,3-octadiene, myrcene, farnesene, 1,3-cyclohexadiene, piperylene, and mixtures thereof.

In embodiments, each block "S" has a hydrogenation level of < 30%, or < 20%, or < 10%, or < 5%, based on total double bonds present in the block "S". In embodiments, diene units in each block "R" have a hydrogenation level of > 90%, or > 95%, or > 98%, or up to 100%, or 80 - 99%, or 90 - 98%.

In embodiments, the HSBC comprises a mixture of at least two block copolymers, selected from (i) diblock copolymers and (ii) multi-block copolymers having more than two blocks (e.g., triblock, tetrablock, pentablock, etc.). In embodiments, the diblock copolymers constitute from 10 - 50, or 12 - 40, or 10 - 35, or > 5, or < 40 wt.%; the multi-block copolymer constitute from 85 - 90, or 60 - 88, or 65 - 90, or > 60, or < 95 wt.%, based on total weight of the HSBC

In embodiments, the HSBC has a butylene ("B") unit content of 25 - 60, or 30 - 55, or 35 - 50, or 30 - 50, or 25 - 50, or > 25, or < 60 wt.%, based on total hydrogenated diene units in the block "R".

In embodiments, the HSBC has a vinyl aromatic unit content (VAC) of 8 - 35, or 10 - 35, or 10 - 25, or 5 - 20, or 12 - 45, or 15 - 30, or 5 - 32, or 25 - 35, or > 7, or < 40 wt.%, based on total weight of the HSBC.

In embodiments, each block "S" has a molecular weight (Mₚ) of 2 - 25, or 3 - 20, or 4 - 15, or 3 - 10, or 2 - 12, or > 2, or < 25 kg/mol.

In embodiments, the HSBC has a molecular weight (Mₚ) of 40 - 300, or 50 - 250, or 60 - 220, or 40 - 180, or 65 - 160, or 80 - 140, or 100 - 180, or > 50, or < 200 kg/mol.

In embodiments, the HSBC has a melt flow rate (MFR) of 2 - 40, or 3 - 35, or 5 - 30, or 4 - 28, or 10 - 28, or 7 - 20, or 2 - 25, or > 4, or < 30 g/10 min at 230°C with 5 kg load, measured according to ASTM D1238.

In embodiments, the HSBC has a structure of S-E/B-S, having each block "S" composed of styrene units and block E/B contains ethylene ("E") units and butylene ("B") units.

Examples of SBCs include styrene-butadiene (S-B), styrene-butadiene-styrene (S-B-S), styrene-isoprene (S-I), styrene-isoprene-styrene (S-I-S), styrene-isoprene/butadiene (S-I/B), styrene-isoprene/butadiene-styrene (S-I/B-S), styrene-butadiene/styrene (S-B/S), styrene-butadiene/styrene-styrene (S-B/S-S), styrene-isoprene/styrene (S-I/S), styrene-isoprene/styrene-styrene (S-I/S-S) and combinations thereof. Examples of HSBCs include styrene-ethylene/butylene-styrene (S-E/B-S), styrene-ethylene-propylene/methylene-butylene-styrene (S-EP/MB-S), styrene-ethylene/butylene/ethylene-propylene/methylene-butylene-styrene (S-E/B/EP/MB-S), styrene-ethylene/butylene/styrene-styrene (S-E/B/S-S), styrene-ethylenepropylene/methylene-butylene/styrene-styrene (S-EP/MB/S-S), and mixtures thereof.

In embodiments, the functionalized HSBC comprises in place or in addition to maleic anhydride, epoxy, and silane, other functional groups selected from the group consisting of amino, phosphino, acrylates, hydroxy, carboxylic acids / salts, sulfonic acid, phosphate, phosphine oxide, phosphoric acid, alkoxide, nitrile, thioether, thiol, silicon or boron containing compounds, fumaric acid, itaconic acid, citraconic acid, itaconic anhydride, citraconic anhydride, allylsuccinic anhydride, and combinations thereof.

In embodiments, the HSBC is functionalized with a maleic anhydride functional group to obtain a maleated HSBC (HSBC-g-MA). The maleation of HSBC can be carried out in the melt, in solution, or in the solid state, and the process can be performed either continuously or in batch mode. Various free radical initiators, such as peroxides and azo compounds, can be employed to facilitate the grafting of maleic anhydride. In embodiments, the HSBC-g-MA has a grafted maleic anhydride content of > 0.5, or < 10, or 0.5 - 10, or 0.5 - 5, or 0.5 - 2.5 wt.%, based on total weight of the maleated HSBC.

The recycled polymer composition can include other types of functionalized HSBCs, in place of or in addition to HSBC-g-MA. Examples include epoxy functionalized HSBC (e-HSBC), epoxy functionalized USBC (e-USBC), epoxy functionalized pHSBC (e-pHSBC), etc. The e-HSBC can be prepared by first hydrogenating SBC to a hydrogenation level of at least 97%, followed by epoxidation to introduce epoxy functionality. ¹H NMR can be used to confirm and characterize the structure of the functionalized polymers (e.g., e-HSBC, e-USBC, e-pHSBC, etc.).

In embodiments, the e-HSBC has epoxy functional groups in amounts of 1 - 40, or 2 - 35, or 3 - 30, or 5 - 25, or 4 - 20 wt.%, based on total weight of the block R.

In embodiments, the e-HSBC has a degree of epoxidation of up to 100%, or 15 - 99%, or 10 - 92%, or 40 - 80%, or 55 - 95%, or 60 - 85%, relative to the polymer block susceptible to epoxidation.

In embodiments, the HSBC is functionalized with a silane to obtain a silane functionalized HSBC (Si-HSBC). Examples of silanes include vinyltrimethoxysilane, vinyltriethoxysilane, vinyltributoxysilane, vinyldimethoxyethoxysilane, vinyldimethoxybutoxysilane, vinyldiethoxybutoxysilane, allyltrimethoxysilane, allyltriethoxysilane, methacryloxypropyltrimethoxysilane, methacryloxypropyltriethoxysilane, dimethoxymethylsilane, diethoxymethylvinylsilane, p-styryltrimethoxysilane, p-styryltriethoxysilane, and mixture thereof.

In embodiments, the Si-HSBC contains silane functional groups in amounts of 0.1 - 15, or 0.5 - 12, or 1 - 10, or 1.5 - 8, or 2 - 6 wt.%, based on the total weight of the Si-HSBC.

In embodiments, the Si-HSBC has a degree of silane functionalization of up to 100%, or 5 - 95%, or 10 - 90%, or 20 - 80%, or 30 - 75%, relative to the polymer block susceptible to silanization.

In embodiments, the block copolymer comprises a blend of a functionalized HSBC and a non-functionalized HSBC in a weight ratio of 1:10 to 10:1, or 1:7 to 7:1, or 1:5 to 5:1, or 1:3 to 3:1. In embodiments, the functionalized HSBC is a HSBC-g-MA.

In embodiments, the block copolymer is added in amounts of 1 - 20, or 1 - 15, or 2 - 10, or 3 - 7 wt.%, based on total weight of the recycled polymer composition. This amount includes the functionalized HSBC, if present.

(Optional Additives): In embodiments, the recycled polymer composition further comprise at least one additive selected from the group consisting of antioxidants, thermal stabilizers, UV stabilizers, plasticizers, processing aids, nucleating agents, flame retardants, antistatic agents, colorants, pigments, fillers, reinforcing agents, coupling agents, dispersing aids, and mixtures thereof.

In embodiments, the additive, if used, is in amounts of up to 10 wt.%, or 0.1 - 10, or 0.5 - 5, or > 0.1, or < 10 wt.%, based on total weight of the recycled polymer composition.

(Optional Virgin Polymers): In embodiments, the recycled polymer composition further comprises a virgin polymer, which is fossil-based, bio-based, or mixtures thereof, in amounts of up to 75, or 1 - 50, or 5 - 40, or 10 - 60, or 5 - 50, or > 10, or < 70 wt.% based on total weight of the recycled polymer composition. The virgin polymer can be selected from polyamide, polyether-polyurea copolymer, polyether-polyester copolymer, polyester-polyurea copolymers, polyurea of paraphenylene-diisocyante and paraphenylenediamine, and mixtures thereof.

Other polymers commonly used in textile manufacturing can also be used in place of, or alongside, polyamide. These polymers can be in recycled or virgin form and include polyesters, acrylics (e.g., acrylic fibers), cellulose-based fibers, polylactic acids, polyolefins, cotton, wool, and similar materials.

(Recycled Polymer Compositions): The recycled polymer composition, based on total weight of the composition, comprises: (a) 80 - 99 wt.% of a recycled polymer blend; (b) 1 - 20 wt.% of a block copolymer; and (c) 0 - 10 wt.% of at least an additive. The amounts of (a) to (c) are independently selected within the specified ranges such that the total of all components is 100 wt.%.

In embodiments, the recycled polyamide and the recycled synthetic fiber material are combined with the block copolymer either as separate components or in a pre-blended form.

(Preparation of Recycled Polymer Compositions): The recycled polymer composition can be prepared using known methods, e.g., compounding, dry blending, etc. In embodiments, the composition is prepared by compounding, wherein all components are mixed and extruded at a suitable compounding temperature (e.g., 180 to 260°C). Following extrusion, the material is cooled and pelletized for subsequent use. The compounding can be carried out using conventional equipment, e.g., single, and twin-screw extruders, mixers, and the like.

In embodiments, the recycled polymer composition is compounded at a temperature ranging from 170 - 260°C, or 180 - 255°C, or 190 - 250°C, or 205 - 245°C, or 210 - 250°C, or 205 - 245°C.

(Properties of Recycled Polymer Compositions): The recycled polymer composition exhibits improved mechanical properties, desired rheological behavior, and enhanced processability compared to a corresponding composition without the block copolymer. The composition also demonstrates superior moldability, for example in injection molding and extrusion processes, while maintaining excellent mechanical strength.

In embodiments, fibers obtained from the recycled polymer composition show improved modulus, strength, toughness, and environmental resistance.

In embodiments, the recycled polymer composition has a melt flow rate (MFR) of > 45, or > 50, or < 70, or 45 - 70, or 50 - 65, or 45 - 65, or 50 - 70 dg/min, measured at 230°C with 2.16 kg load according to ISO 1133.

In embodiments, the recycled polymer composition has a tensile strength at yield of > 25, or < 60, or 25 - 60, or 28 - 50, or 25 - 40MPa, measured according to ASTM D638.

In embodiments, the recycled polymer composition has a tensile strength at break of > 22, or < 50, or 22 - 50, or 25 - 45, or 28 - 40, or 25 - 35 MPa, measured according to ASTM D638.

In embodiments, the recycled polymer composition has a Notched Izod impact strength of > 4, or < 15, or 4 - 15, or 4.2 - 10, or 4.4 - 8, or 4 - 6.5 kJ/m², measured at 25°C according to ISO 180.

In embodiments, the recycled polymer composition has an elongation at yield of > 3%, or < 10 %, or 3 - 10%, or 4 - 8%, or 4.5 - 7.5%, or 4 - 8%, measured according to ASTM D638.

In embodiments, the recycled polymer composition has an ultimate elongation of > 12%, or < 60%, or 12 - 60%, or 15 - 55%, or 17 - 50%, or 15 - 45%, measured according to ASTM D638.

In embodiments, the recycled polymer composition has a tear strength of > 200, or > 210, or < 350, or 200 - 350, or 210 - 330, or 215 - 310 lb/in, measured according to ASTM D624C.

(End-Use Applications): The recycled polymer composition can be used to produce articles, e.g., films, sheets, cables, etc., by employing any suitable molding technique, including, for example, extrusion, injection molding, compression molding, and the like.

In embodiments, the recycled polymer composition is utilized to manufacture fibers, yarns, textiles, fabrics, garments, and related products. In embodiments, a synthetic fiber composition comprises the recycled polymer composition.

The recycled polymer composition can also be employed to form processed articles such as beverage bottles and molded components for household goods, electric appliances, civil engineering applications, and building materials, among others.

(Analytical Methods): The presence and amounts of recycled polyamide and recycled synthetic fiber material in the recycled polymer composition can be determined using Fourier-transform infrared spectroscopy (FTIR), differential scanning calorimetry (DSC), and thermogravimetric analysis (TGA), in conjunction with elemental and structural characterization techniques such as NMR and pyrolysis-gas chromatography-mass spectrometry (Py-GC/MS). These methods can be used to confirm the identity of polyamide structures and fiber-derived copolymers, as well as to estimate the weight ratio of the recycled polyamide to recycled synthetic fiber material.

To detect the HSBC in the composition, gel permeation chromatography (GPC) combined with multi-angle light scattering (MALS) can be employed to determine block architecture. Additionally, FTIR and NMR can be used to confirm the presence of vinyl aromatic units and hydrogenated diene units in the HSBC, including structural features such as the S-R-S or (S-R)ₙX arrangements, and to assess the presence of functional groups (e.g., maleic anhydride, epoxy groups, silanes, etc.). The vinyl aromatic unit content (VAC), butylene unit content, and diblock content of the HSBC can be further quantified using NMR and spectral deconvolution techniques, optionally supported by selective solvent extraction and fractionation methods.

To determine the presence of recycled synthetic fiber material, the sample may be subjected to morphological and thermal analysis to identify fiber-derived polymer components. TGA and DSC can be used to assess thermal degradation profiles and melting transitions characteristic of fiber-forming polymers. The "recycled" nature of the component may be inferred from the absence of manufacturing additives present in virgin fiber grades and from an altered molecular weight distribution, as determined by GPC.

The presence of recycled polyamide may be confirmed using GPC to assess the PDI, which shows a broader distribution and a shift toward lower Mw due to chain scission during prior melt processing. Additionally, thermal degradation behavior analyzed by TGA may differ from that of virgin polyamide due to oxidative degradation products or the presence of residual contaminants.

Mechanical testing of the sample can be conducted to measure physical properties according to standard test methods, such as tensile strength at break in accordance with ASTM D638.

(Examples): The following examples are intended to be non-limiting.

The components used in examples include:

Recycled polymer blend-1 is a PIR mixture containing 76 wt.% of a recycled polyamide 6 and 24 wt.% of polyether-polyurea copolymer.

HSBC-1 is a non-functionalized linear hydrogenated tri-block copolymer (S-E/B-S) having VAC of 13.3 wt.%, block "S" Mₚ of 5, CE of 71%, butylene ("B") unit content of 44 wt.%, block copolymer Mₚ of 145 kg/mol, MFR of 22 g/10 min at 230°C/5 kg, and diblock content of 29 wt.%.

HSBC-g-MA-1 is a maleated HSBC (functionalized HSBC) with a precursor being a linear hydrogenated tri-block copolymer (S-E/B-S) having VAC of 21.65 wt.%, block "S" Mₚ of 6 kg/mol, CE of 85%, butylene ("B") unit content of 41 wt.%, block copolymer Mₚ of 111 kg/mol, MFR of 14 g/10 min at 230°C/5 kg, and diblock content of 15 wt.%. The HSBC-g-MA-1 has grafted maleic anhydride content of 0.7 to 2 wt.%.

AO-1 is an antioxidant, pentaerythritol tetrakis(3-(3,5-di-tert-butyl-4-hydroxyphenyl)propionate).

(Example 1): Preparation of recycled polymer compositions. The components of recycled polymer composition were mixed at room temperature (25°C). The blended mixture was then fed into the feeder and compounded using twin-screw extruder operated at a temperature ranging from 200 to 250°C, followed by pelletization. Test specimens were subsequently prepared by injection molding at a temperature ranging from 220 to 250°C, and compression molding at a temperature of 240°C. C-Ex.1 represents a comparative example.

**Table 1**

| Components (in wt.%) | C-Ex.1 | Ex.1a | Ex.1b | Ex.1c |
|---|---|---|---|---|
| Recycled polymer blend-1 | 99.9 | 94.9 | 94.9 | 94.9 |
| HSBC-1 | - | 5 | - | 3 |
| HSBC-g-MA-1 | - | - | 5 | 2 |
| AO-1 | 0.1 | 0.1 | 0.1 | 0.1 |
| MFR (230°C/2.16 kg) (dg/min) | 57.2 | 54.9 | 57.1 | 51.2 |
| Tensile strength at yield (MPa) | 34.60 (1.17) | 38.17 (3.35) | 30.41 (0.95) | 36.87 (0.89) |
| Tensile strength at break (MPa) | 21.44 (9.74) | 33.28 (2.10) | 28.37 (0.72) | 30.81 (2.09) |
| Notched Izod Impact Strength at 25°C (kJ/m²) | 5.64 | 6.25 | 4.98 | 4.56 |
| Elongation at yield (%) | 5.12 (0.05) | 5.84 (0.12) | 5.53 (0.21) | 6.04 (0.18) |
| Ultimate elongation (%) | 17.58 (4.69) | 20.40 (4.43) | 42.02 (4.26) | 17.14 (0.87) |
| Tear strength (lb/in) | 262 | 219 | 299 | 249 |

Values in parenthesis indicate standard deviation.

## Claims

1. A recycled polymer composition comprising:
(a) 80 to 99 wt.% of a recycled polymer blend consisting of:
(a1) a recycled polyamide, and
(a2) a recycled synthetic fiber material containing one or more polymers selected from the group consisting of: polyether-polyurea copolymer, polyether-polyester copolymer, polyester-polyurea copolymer, and polyurea derived from paraphenylene-diisocyanate and paraphenylenediamine;
wherein a weight ratio of (a1) to (a2) is from 1:10 to 10:1;
(b) 1 to 20 wt.% of a block copolymer selected from:
(i) a functionalized hydrogenated styrenic block copolymer, and
(ii) a non-functionalized hydrogenated styrenic block copolymer,
wherein each of the block copolymers (i) and (ii) independently has a general structure selected from S-R-S, (S-R)ₙX, (S-R-S)ₙX, and mixtures thereof, wherein
X is a residue of a coupling agent,
n is an integer from 2 to 30,
each block "S" is composed of vinyl aromatic units, and
each block "R" is composed of hydrogenated diene units,
wherein
if the block copolymer is a functionalized hydrogenated styrenic block copolymer, the block "R" comprises at least one functional group selected from maleic anhydride, epoxy, and silane;
if the block copolymer is a non-functionalized hydrogenated styrenic block copolymer, the block copolymer has:
a vinyl aromatic unit content (VAC) of 8 to 35 wt.%,
a butylene ("B") unit content of 25 to 60 wt.%, and
a diblock content of 10 to 50 wt.%; and
(c) 0 to 10 wt.% of at least an additive, based on total weight of the recycled polymer composition;
wherein:
the recycled polymer composition has a tensile strength at break of > 22 MPa, measured according to ASTM D638.

2. The recycled polymer composition of claim 1, wherein the block copolymer is a non-functionalized hydrogenated styrenic block copolymer having a structure of S-R-S.

3. The recycled polymer composition of any of claims 1-2, wherein the block copolymer is a functionalized hydrogenated styrenic block copolymer comprising at least one functional group selected from the group consisting of maleic anhydride, epoxy, and silane.

4. The recycled polymer composition of any of claims 1-3, wherein the block copolymer comprises a blend of a functionalized hydrogenated styrenic block copolymer and a non-functionalized hydrogenated styrenic block copolymer in a weight ratio of 1:10 to 10:1.

5. The recycled polymer composition of any of claims 1-4, wherein the recycled polymer composition has a melt flow rate (MFR) of > 45 dg/min, measured at 230°C with 2.16 kg load according to ISO 1133.

6. The recycled polymer composition of any of claims 1-5, wherein the recycled polyamide is a nylon 6.

7. The recycled polymer composition of any of claims 1-6, wherein the recycled synthetic fiber material is a polyether-polyurea copolymer.

8. The recycled polymer composition of any of claims 1-7, wherein the block "S" has a molecular weight (Mₚ) of 2 to 25 kg/mol.

9. The recycled polymer composition of claim 1, wherein the block copolymer is a non-functionalized hydrogenated styrenic block copolymer having:
a vinyl aromatic unit content (VAC) of 10 to 25 wt.%; and
a butylene ("B") unit content of 35 to 50 wt.%, based on total hydrogenated diene units in the block "R".

10. The recycled polymer composition of claim 1, wherein the block copolymer is a non-functionalized hydrogenated styrenic block copolymer having:
a butylene ("B") unit content of 30 to 55 wt.%;
a molecular weight (Mₚ) of block "S" of 3 to 10 kg/mol;
a molecular weight (Mₚ) of the block copolymer of 100 to 180 kg/mol;
a vinyl aromatic unit content (VAC) of 5 to 20 wt.%; and
a diblock content of 10 to 35 wt.%.

11. The recycled polymer composition of claim 1, wherein the block copolymer is a functionalized hydrogenated styrenic block copolymer; and wherein the functionalized hydrogenated styrenic block copolymer is a maleic anhydride grafted hydrogenated styrenic block copolymer.

12. The recycled polymer composition of claim 11, wherein the maleic anhydride grafted hydrogenated styrenic block copolymer, prior to grafting, is a triblock copolymer having a structure of S-E/B-S;
wherein
each block S is composed of styrene units, and
the block E/B is composed of ethylene ("E") units and butylene ("B") units.

13. The recycled polymer composition of any of claims 11-12, wherein the maleic anhydride grafted hydrogenated styrenic block copolymer has a grafted maleic anhydride content of > 0.5 wt.%, based on total weight of the maleic anhydride grafted hydrogenated styrenic block copolymer.

14. The recycled polymer composition of any of claims 1-13, wherein the recycled polymer composition has at least one of:
a tensile strength at yield of > 25 MPa;
a tensile strength at break of 22 to 50 MPa;
an elongation at yield of > 3%; and
an ultimate elongation of > 12%;
all are measured according to ASTM D638.

15. A synthetic fiber composition comprising the recycled polymer composition of any of claims 1-14.
